# DEMANDE DE BREVET EUROPEEN

(11) **EP 4 417 469 A1**
(43) Date de publication de la demande: **21.08.2024**
(21) Numéro de dépôt: 24151662.4
(22) Date de dépôt: 12.01.2024
(51) Int. Cl.: B60R 13/04

(54) **VÉHICULE À PARTIE(S) STRUCTURELLE(S) D'ENCADREMENT DE PASSAGE(S) MASQUÉE(S) EN L'ABSENCE DE PORTE LATÉRALE**

(30) Priorité: 17.02.2023 FR 2301485
(71) Demandeur: Stellantis Auto SAS, 78300 Poissy (FR)
(72) Inventeur: BENZGUER, REDA, 20270 CASABLANCA (MA); MRIROUD, ANOUAR, 20270 CASABLANCA (MA); SOUILMI, AHMED, 20270 CASABLANCA (MA); BOUSERHANE, MOHAMED, 16000 SIDI KACEM (MA)

(57) **Abrégé**

Un véhicule (V) comprend une structure (SV) délimitant un habitacle (H) et ayant au moins une sous-partie latérale (SPL) délimitant un passage latéral pour l'accès d'un passager à cet habitacle (H), et au moins une pièce d'enjolivement (PE1-PE3) couplée à la face externe (FE) d'au moins une partie de cette sous-partie latérale (SPL) et propre à masquer et enjoliver cette partie en l'absence de porte latérale.

## Description

### Domaine technique de l'invention

L'invention concerne les véhicules comprenant une structure délimitant un habitacle et ayant au moins une sous-partie latérale délimitant un passage pour l'accès d'un passager à cet habitacle.

### Etat de la technique

Certains véhicules, généralement de type automobile, comprennent une structure délimitant un habitacle auquel un passager peut accéder par au moins un passage latéral. Dans ce cas, la structure comprend au moins une sous-partie latérale qui délimite un tel passage latéral.

Dans la plupart des véhicules présentés ci-avant l'accès à chaque passage latéral est contrôlé par une porte latérale (ou portière). Lorsque cette dernière est fermée, elle masque la sous-partie latérale de la structure qui encadre le passage latéral correspondant. Mais, si l'on souhaite que le véhicule soit dépourvu de porte latérale (ou portière), chaque sous-partie latérale de la structure est en permanence visible et donc laisse apparaître les parties techniques, ce qui nuit au style du véhicule et peut être considéré comme un défaut de conception dégradant la qualité perçue du véhicule et la réputation de son constructeur.

L'invention a donc notamment pour but d'améliorer la situation.

### Présentation de l'invention

Elle propose notamment à cet effet un véhicule comprenant une structure délimitant un habitacle et ayant au moins une sous-partie latérale délimitant un passage latéral pour l'accès d'un passager à cet habitacle.

Ce véhicule se caractérise par le fait qu'il comprend au moins une pièce d'enjolivement couplée à une face externe d'au moins une partie de la (d'une) sous-partie latérale et propre à masquer et enjoliver cette partie en l'absence de porte latérale.

Grâce à l'invention, chaque sous-partie latérale de la structure est en permanence invisible et enjolivée, ce qui permet de masquer totalement les parties techniques présentes sur la face externe de la sous-partie latérale, et de participer au style du véhicule.

Le véhicule selon l'invention peut comporter d'autres caractéristiques qui peuvent être prises séparément ou en combinaison, et notamment :
- dans un premier mode de réalisation, il peut comprendre trois pièces d'enjolivement couplées respectivement à la face externe de trois parties de la (chaque) sous-partie latérale qui se prolongent deux à deux ;
- dans un second mode de réalisation, il peut comprendre une unique pièce d'enjolivement couplée à la face externe de trois parties de la (chaque) sous-partie latérale qui se prolongent deux à deux ;
- dans le premier ou second mode de réalisation, les trois parties peuvent être une partie avant sensiblement verticale, une partie arrière sensiblement verticale, et une partie inférieure sensiblement horizontale et reliant entre elles les partie avant et partie arrière ;
- dans le premier ou second mode de réalisation, il peut aussi comprendre une pièce de couplage et renfort solidarisée fixement à la face externe des trois parties de la (chaque) sous-partie latérale et à laquelle est couplée chaque pièce d'enjolivement ;
- en variante dans le premier mode de réalisation, il peut aussi comprendre trois pièces de couplage et renfort solidarisées fixement et respectivement à la face externe des trois parties de la (chaque) sous-partie latérale et auxquelles sont respectivement couplées les trois pièces d'enjolivement ;
- en présence d'au moins l'une des deux dernières sous-options, chaque pièce de couplage et renfort peut être réalisée par moulage d'une matière plastique ou synthétique ;
- chaque pièce d'enjolivement peut être réalisée par moulage d'une matière plastique ou synthétique ;
- il peut comprendre deux sous-parties latérales, droite et gauche, délimitant deux passages latéraux pour l'accès d'un passager à l'habitacle et à chacune desquelles est couplée au moins une pièce d'enjolivement (avec interposition d'au moins une pièce de couplage et renfort) ;
- il peut être de type automobile.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue de côté, une partie d'un exemple de réalisation d'un véhicule selon l'invention, une fois ses pièces d'enjolivement installées, et
[Fig. 2] illustre schématiquement et fonctionnellement, dans une vue de côté, le véhicule de la figure 1, après l'installation de pièces de couplage et renfort mais avant l'installation des pièces d'enjolivement.

### Description détaillée de l'invention

L'invention a notamment pour but de proposer un véhicule V dont au moins une sous-partie structurelle SPL, encadrant un passage latéral permettant d'accéder à l'habitacle H, est au moins partiellement masquée et enjolivée en l'absence de porte latérale.

Dans ce qui suit, on considère, à titre d'exemple non limitatif, que le véhicule V est de type automobile. Il s'agit par exemple d'une petite voiture à deux places et à groupe motopropulseur (ou GMP) tout électrique. Mais l'invention n'est pas limitée à ce type de véhicule. Elle concerne en effet tout véhicule (terrestre, maritime (ou fluvial), ou aérien) comprenant une structure délimitant un habitacle et ayant au moins une sous-partie latérale délimitant un passage latéral pour l'accès d'un passager à cet habitacle.

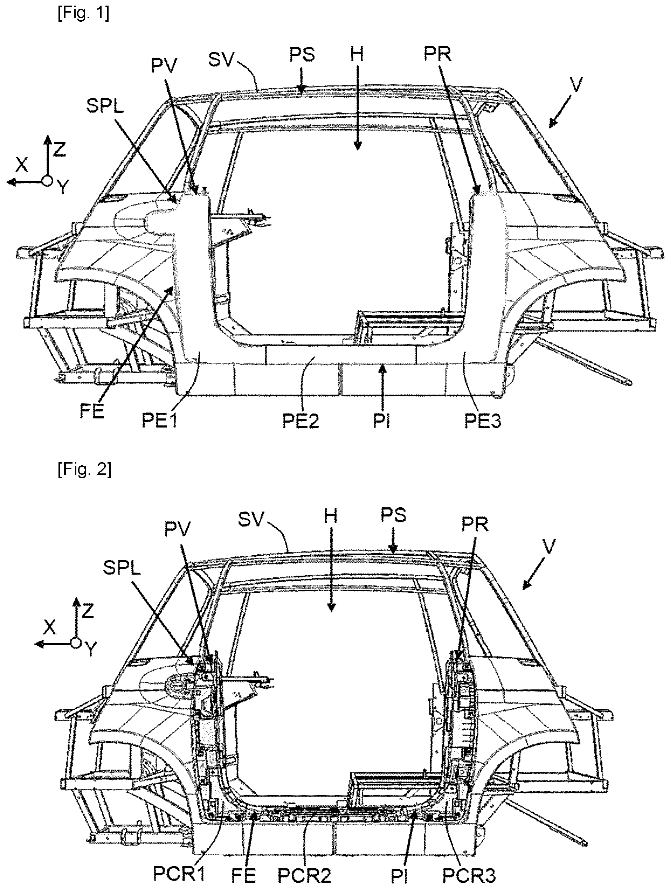

Sur les figures 1 et 2 la direction X est la direction longitudinale du véhicule V, laquelle est parallèle aux côtés latéraux (ou longitudinaux) comportant les portes latérales, la direction Y est la direction transversale du véhicule V, laquelle est perpendiculaire à la direction longitudinale X, et la direction Z est la direction verticale du véhicule V, laquelle est perpendiculaire aux directions longitudinale X et transversale Y.

On a schématiquement illustré sur la figure 1 une partie d'un exemple de réalisation d'un véhicule V selon l'invention. Comme illustré, un véhicule V, selon l'invention, comprend notamment une structure SV et au moins une pièce d'enjolivement (ou enjoliveur) PEj.

La structure SV délimite un habitacle H dans lequel peut s'installer au moins un passager (et notamment le conducteur), et comprend au moins une sous-partie latérale SPL qui délimite un passage latéral pour l'accès de ce passager à cet habitacle H. On notera que dans l'exemple illustré non limitativement sur les figures 1 et 2 la structure SV comprend deux sous-parties latérales SPL, droite et gauche, délimitant respectivement deux passages latéraux. Mais la structure SV pourrait ne comprendre qu'une seule sous-partie latérale SPL délimitant un passage latéral, ou bien plus de deux sous-parties latérales SPL délimitant chacune un passage latéral, et par exemple quatre.

Chaque sous-partie latérale SPL (délimitant un passage latéral) comprend au moins une partie avant PV qui est sensiblement verticale (direction verticale Z), une partie arrière PR qui est sensiblement verticale (direction verticale Z), et une partie inférieure PI qui est sensiblement horizontale (direction longitudinale X) et relie entre elles les partie avant PV et partie arrière PR (au niveau de leurs extrémités inférieures). Elle peut aussi comprendre, comme illustré non limitativement, une partie supérieure PS qui est sensiblement horizontale et relie entre elles les partie avant PV et partie arrière PR (au niveau de leurs extrémités supérieures).

Les notions « d'avant » et « d'arrière » sont ici utilisées par rapport à l'extrémité avant du véhicule V. Par conséquent, une partie avant d'un élément est plus proche de l'extrémité avant qu'une partie arrière de ce même élément.

Par ailleurs, le mot « sensiblement » signifie ici égal à +/- 5°. En d'autres termes, la partie avant PV ou arrière PR est verticale à +/-5°, et la partie inférieure PI est horizontale à +/- 5°.

Chaque pièce d'enjolivement PEj est couplée à la face externe FE d'au moins une partie de la (d'une) sous-partie latérale SPL et est propre à masquer et enjoliver cette partie en l'absence de porte latérale.

Ainsi, lorsque le véhicule V est dépourvu de porte latérale (ou portière), chaque sous-partie latérale SPL de sa structure SV est en permanence invisible (ou masquée) et en outre enjolivée (possiblement en fonction d'un souhait de son usager). Cela permet de masquer totalement les parties techniques présentes sur la face externe FE de la sous-partie latérale SPL, et de participer au style du véhicule V (avec une amélioration de la qualité perçue du véhicule V et de la réputation de son constructeur).

Au moins deux modes de réalisation peuvent être envisagés pour le masquage et l'enjolivement.

Dans un premier mode de réalisation, illustré non limitativement sur la figure 1, le véhicule V peut comprendre trois pièces d'enjolivement (ou enjoliveurs) PEj (j = 1 à 3) qui sont couplé(e)s respectivement à la face externe FE de trois parties de la (chaque) sous-partie latérale SPL qui se prolongent deux à deux.

Par exemple, et comme illustré non limitativement sur la figure 1, ces trois parties peuvent être respectivement les partie avant PV, partie arrière PR et partie inférieure PI décrites plus haut. Dans ce cas les trois pièces d'enjolivement PEj constituent un ensemble d'enjolivement en forme générale de U, comme illustré.

De préférence, les trois pièces d'enjolivement PEj se prolongent deux à deux afin de donner une impression de continuité.

Dans ce premier mode de réalisation, le couplage peut être réalisé en une unique opération si les trois pièces d'enjolivement PEj sont préalablement couplées entre elles (par exemple par clippage) afin de constituer un ensemble à coupler à la face externe FE, ou bien chaque pièce d'enjolivement PEj peut être couplée à la face externe FE indépendamment des autres pièces d'enjolivement PEj.

Dans un second mode de réalisation (non illustré), le véhicule V peut comprendre une unique pièce d'enjolivement PEj qui est couplée à la face externe FE de trois parties de la (chaque) sous-partie latérale SPL qui se prolongent deux à deux.

Par exemple, et comme illustré non limitativement sur la figure 1, ces trois parties peuvent être respectivement les partie avant PV, partie arrière PR et partie inférieure PI décrites plus haut. Dans ce cas les trois pièces d'enjolivement PEj constituent un ensemble d'enjolivement en forme générale de U.

On notera que dans le premier ou second mode de réalisation le véhicule V peut aussi comprendre une pièce de couplage et renfort PCRj qui est solidarisée fixement à la face externe FE des trois parties de la sous-partie latérale SPL et à laquelle est couplée chaque pièce d'enjolivement PEj. Cette pièce de couplage et renfort PCRj, en forme générale de U, assure non seulement une fonction d'interface de couplage pour chaque pièce d'enjolivement PEj, mais aussi une fonction de renfort pour chaque pièce d'enjolivement PEj. En effet, elle est agencée pour permettre, d'une part, son ancrage sur les parties (ici PV, PR et PI) d'une sous-partie latérale SPL qui ne sont pas initialement adaptées à cet effet, puisqu'elles sont à priori identiques à celles que comprend un véhicule identique au véhicule V mais équipé de portes latérales, et, d'autre part, l'ancrage sur elle de chaque pièce d'enjolivement PEj. L'ancrage direct de chaque pièce d'enjolivement PEj sur la face externe FE serait plus difficilement réalisable en l'absence de pièce de couplage et renfort PCRj. En outre, la fonction de renfort est particulièrement utile, notamment dans le secteur de la paroi inférieure PI d'une sous-partie latérale SPL, car c'est une zone d'appui de pied et le risque d'endommagement et/ou de décollement de la pièce d'enjolivement PEj y est relativement important (notamment lors des phases de sortie de l'habitacle H).

En variante, et comme illustré non limitativement sur la figure 2, dans le premier mode de réalisation le véhicule V peut comprendre trois pièces de couplage et renfort PCRj solidarisées fixement et respectivement à la face externe FE des trois parties de la (chaque) sous-partie latérale SPL et auxquelles sont respectivement couplées les trois pièces d'enjolivement PEj.

Chacune de ces pièces de couplage et renfort PCRj assure non seulement une fonction d'interface de couplage pour la pièce d'enjolivement PEj correspondante, mais aussi une fonction de renfort pour la pièce d'enjolivement PEj correspondante. En effet, chaque pièce de couplage et renfort PCRj est agencée pour permettre, d'une part, son ancrage sur une partie (ici PV, PR ou PI) d'une sous-partie latérale SPL qui n'est pas initialement adaptée à cet effet, puisqu'elle est à priori identique à celle que comprend un véhicule identique au véhicule V mais équipé de portes latérales, et, d'autre part, l'ancrage sur elle de la pièce d'enjolivement PEj correspondante. L'ancrage direct de chaque pièce d'enjolivement PEj sur la face externe FE serait plus difficilement réalisable en l'absence de la pièce de couplage et renfort PCRj correspondante.

Par exemple, le couplage de chaque pièce de couplage et renfort PCRj à la face externe FE peut se faire par clippage et/ou vissage. Egalement par exemple, le couplage de chaque pièce d'enjolivement PEj à la pièce de couplage et renfort PCRj correspondante peut se faire par clippage et/ou vissage.

Egalement par exemple, chaque pièce de couplage et renfort PCRj peut être réalisée par moulage d'une matière plastique ou synthétique. A titre d'exemple, on pourra utiliser du polyuréthane (ou PU) ou du polyéthylène (ou PE).

Egalement par exemple, chaque pièce d'enjolivement PEj peut être réalisée par moulage d'une matière plastique ou synthétique. A titre d'exemple, on pourra utiliser du polyuréthane (ou PU) ou du polyéthylène (ou PE).

## Revendications

1. Véhicule (V) comprenant une structure (SV) délimitant un habitacle (H) et ayant au moins une sous-partie latérale (SPL) délimitant un passage latéral pour l'accès d'un passager audit habitacle (H), **caractérisé en ce qu'**il comprend au moins une pièce d'enjolivement (PEj) couplée à une face externe (FE) d'au moins une partie de ladite sous-partie latérale (SPL) et propre à masquer et enjoliver cette partie en l'absence de porte latérale.

2. Véhicule selon la revendication 1, **caractérisé en ce qu'**il comprend trois pièces d'enjolivement (PEj) couplées respectivement à ladite face externe (FE) de trois parties (PV, PR, PI) de la sous-partie latérale (SPL) qui se prolongent deux à deux.

3. Véhicule selon la revendication 1, **caractérisé en ce qu'**il comprend une unique pièce d'enjolivement (PEj) couplée à ladite face externe (FE) de trois parties (PV, PR, PI) de la sous-partie latérale (SPL) qui se prolongent deux à deux.

4. Véhicule selon la revendication 2 ou 3, **caractérisé en ce que** lesdites trois parties sont une partie avant (PV) sensiblement verticale, une partie arrière (PR) sensiblement verticale, et une partie inférieure (PI) sensiblement horizontale et reliant entre elles lesdites partie avant (PV) et partie arrière (PR).

5. Véhicule selon l'une des revendications 2 à 4, **caractérisé en ce qu'**il comprend une pièce de couplage et renfort (PCRj) solidarisée fixement à ladite face externe (FE) desdites trois parties de la sous-partie latérale (SPL) et à laquelle est couplée chaque pièce d'enjolivement (PEj).

6. Véhicule selon la revendication 2, **caractérisé en ce qu'**il comprend trois pièces de couplage et renfort (PCRj) solidarisées fixement et respectivement à ladite face externe (FE) desdites trois parties (PV, PR, PI) de la sous-partie latérale (SPL) et auxquelles sont respectivement couplées lesdites trois pièces d'enjolivement (PEj).

7. Véhicule selon la revendication 5 ou 6, **caractérisé en ce que** chaque pièce de couplage et renfort (PCRj) est réalisée par moulage d'une matière plastique ou synthétique.

8. Véhicule selon l'une des revendications 1 à 7, **caractérisé en ce que** chaque pièce d'enjolivement (PEj) est réalisée par moulage d'une matière plastique ou synthétique.

9. Véhicule selon l'une des revendications 1 à 8, **caractérisé en ce qu'**il comprend deux sous-parties latérales (SPL), droite et gauche, et délimitant deux passages latéraux pour l'accès d'un passager audit habitacle (H).

10. Véhicule selon l'une des revendications 1 à 9, **caractérisé en ce qu'**il est de type automobile.
